# EUROPÄISCHE PATENTSCHRIFT

(11) **EP 4 361 082 B1**
(45) Veröffentlichungstag und Bekanntmachung des Hinweises auf die Patenterteilung: **04.11.2026**
(21) Anmeldenummer: 24164359.2
(22) Anmeldetag: 16.12.2019
(51) Int. Cl.: B66D 1/30

(54) **SEILTROMMEL FÜR EINE SEILWINDE SOWIE VERFAHREN ZU DEREN HERSTELLUNG**
CABLE DRUM FOR A CABLE WINCH AND METHOD FOR THE PRODUCTION THEREOF
TAMBOUR À CÂBLE POUR UN TREUIL AINSI QUE SON PROCÉDÉ DE FABRICATION

(30) Priorität: 16.01.2019 DE 102019101046
(43) Veröffentlichungstag der Anmeldung: 01.05.2024
(62) Dokumentnummer(n) der früheren Anmeldung(en) nach Art. 76 EPÜ: 19824295.0 / 3 883 877
(73) Patentinhaber: Liebherr-Components Biberach GmbH, 88400 Biberach an der Riß (DE)
(72) Erfinder: MUPENDE, Ilaka, 89231 Neu-Ulm (DE); HAUSLADEN, Norbert, 88400 Biberach (DE); HEMEL, Bernd, 88400 Biberach (DE)
(74) Vertreter: Lorenz Seidler Gossel Part. mbB

(56) Entgegenhaltungen:
- CN-A- 103 496 647
- CN-U- 203 229 348
- CN-U- 204 980 984
- DE-B4- 102015 119 336
- DE-U1- 202008 004 661

## Beschreibung

Die vorliegende Erfindung betrifft eine Seiltrommel für eine Seilwinde eines Seiltriebs, mit einem Trommelmantel sowie zwei endseitig an den Trommelmantel angrenzenden Bordscheiben, wobei der Trommelmantel und/oder die Bordscheiben aus faserverstärktem Verbundwerkstoff gefertigt sind. Die Erfindung betrifft ferner ein Verfahren zur Herstellung einer solchen Seiltrommel.

Seilwinden werden in diversen Anwendungsgebieten eingesetzt und umfassen im Wesentlichen drei Hauptbaugruppen, nämlich zum einen die Seiltrommel mit einem Trommelmantel und stirnseitig angebrachten, den Trommelmantel begrenzenden End- bzw. Bordscheiben, zum anderen ein Antriebsgetriebe und schließlich einen Windenrahmen, an dem die Seiltrommel drehbar gelagert ist. Das genannte Antriebsgetriebe ist dabei oftmals im Inneren der Seiltrommel untergebracht und kann beispielsweise als ein- oder mehrstufiges Planetengetriebe ausgebildet sein.

Solche Seilwinden werden beispielsweise für Hebezeuge im Maschinen- und Anlagenbau oder in der Umschlagtechnik eingesetzt, wobei die Seilwinden zum vertikalen Materialtransport, aber auch als horizontaler bzw. schräg geneigter Vorschubantrieb dienen können. Dabei können die Seilwinden insbesondere an Kranen wie Baukrane, Fahrzeugkrane oder maritime Krane wie Hafen-, Schiffs- und Offshore-Kranen verbaut werden, wobei die Seilwinden hier oft Hubwinden zum Auf- und Abspulen eines Hubseils, aber auch Abspannwinden für Abspannseile oder Vorschubwinden beispielsweise zum Verfahren einer Laufkatze sein können. Solche Seilwinden werden ferner ebenfalls eingesetzt für andere Baumaschinen wie Raupenkrane oder als Derrickwinden oder andere maritime Anwendungen wie beispielsweise als Tiefseewinden. Auch in der Luftfahrt werden solche Winden eingesetzt, beispielsweise als Hub- oder Lastwinden an Helikoptern oder Luftschiffen.

Typischerweise treten an der Seiltrommel durch das unter Last aufzuspulende Seil beträchtliche Druckspannungen auf, unter denen die Seiltrommel das darauf aufgewickelte Seilpaket mit ausreichender Sicherheit halten muss. Das aufzuwickelnde Seil wird hierbei oft nicht nur in einer Lage aufgespult, sondern in mehreren Lagen - auch mehr als 10 Lagen - übereinander gestapelt auf der Seiltrommel aufgewickelt, wobei jede einzelne aufzuwickelnde Lage wiederum Druckspannungen in das Seiltrommelrohr einbringt, sodass nach dem Superpositionsprinzip bei an sich gleichbleibendem Seilzug die Druckspannungen im Trommelmantel mit zunehmender Anzahl an Wickellagen immer mehr zunehmen.

Um diesem äußeren Druck standzuhalten, wird der Trommelmantel mit zum Teil beträchtlichen Wandstärken bislang üblicherweise aus Stahl oder Gusswerkstoff gefertigt, teilweise unter Verwendung von hochfesten Stählen wie Vergütungsstählen oder Feinkornbaustählen.

Solchermaßen massiv ausgebildete Seiltrommeln aus Stahl oder Gusswerkstoff bringen jedoch ein recht hohes Gewicht mit sich, was bei gewichtssensiblen Anwendungen nachteilig ist. Ein hohes Seilwindengewicht kann bei den vorgenannten Anwendungen aus verschiedenen Gründen nachteilig sein. Beispielsweise bei Mobilkranen muss darauf geachtet werden, dass das zulässige Straßentransportgewicht bzw. die zulässigen Achslasten eingehalten werden. Je nach Montageort der Seilwinde belastet deren Gewicht auch die Statik eines Krans, beispielsweise wenn die Seilwinde am Gegenausleger eines Turmdrehkrans angebracht ist und vom Turmfachwerk getragen werden muss, oder das Seilwindengewicht kann die maximale Traglast einer Hubvorrichtung erniedrigen, beispielsweise wenn die Seilwinde am Förderkorb eines Aufzugs angebracht ist und mitgehoben werden muss.

Um das Seilwindengewicht zu reduzieren, wurde in der DE 10 2015 119 336 B4 bereits vorgeschlagen, die Seiltrommel mit einer Honigwabenkonstruktion zu versehen, bei der auf einem wabenförmigen Mantelkern innen und außen eine Manteldeckschicht aufgebracht wird, die die Wabenstruktur verschließen. In entsprechender Weise werden die Bordscheiben aus einem Wabenkern gebildet, auf den rechts und links Deckschichten aufgebracht werden. Dies soll durch ein materialadditives 3D-Druckverfahren, nämlich durch selektives Laserschmelzen oder Laser Metal Deposition erfolgen. Solche durch selektives Laserschmelzen oder Laser Metal Deposition hergestellte Strukturen neigen jedoch zu Rissbildung, Sprödigkeit und Verzug, und sind zudem wenigstens bislang sehr teuer.

Die DE 20 2008 004 661 U1 zeigt eine Seilwinde gemäß dem Oberbegriff des Anspruchs 1 mit einer Kunststofftrommel aus einem faserverstärkten Kunststoff, wobei die Trommel in Sandwich-Bauweise mit mehreren Faserwerkstofflagen und jeweils einer Zwischenlage aus druckfestem Schaum in Wabenstruktur ausgebildet sein kann.

Ferner schlägt die Schrift DE 20 2011 001 845 U1 Seilwinden mit einer Kunststofftrommel aus einem faserverstärkten Kunststoff wie GFK oder CFK vor, wobei auf den Trommelmantel eine reibungsreduzierende und dämpfende Oberflächenschicht aufgebracht werden soll, um einen ruhigen, verschleißarmen Seillauf zu gewährleisten.

Der vorliegenden Erfindung liegt die Aufgabe zugrunde, eine verbesserte Seiltrommel der eingangs genannten Art sowie ein verbessertes Verfahren zu deren Herstellung zu schaffen, die Nachteile des Standes der Technik vermeiden und letzteren in vorteilhafter Weise weiterbilden. Insbesondere soll eine leichtbauende und dennoch ausreichend stabile, hohen Seilbelastungen wiederstehende Seiltrommel geschaffen werden, die kostengünstig herstellbar ist.

Erfindungsgemäß wird die genannte Aufgabe durch eine Seiltrommel gemäß Anspruch 1, eine Seilwinde mit einer solchen Seiltrommel gemäß Anspruch 13 sowie ein Verfahren zur Herstellung einer Seiltrommel nach Anspruch 14 gelöst. Bevorzugte Ausgestaltungen der Erfindung sind Gegenstand der abhängigen Ansprüche.

Es wird also vorgeschlagen, den Trommelmantel und/oder die Bordscheiben aus faserverstärktem Verbundwerkstoff zu fertigen, wobei der faserverstärkte Verbundwerkstoff selektiv eingesetzt wird, um einen intelligenten Aufbau des Trommelmantels bzw. der Bordscheiben zu erzielen. Gemäß einem Aspekt der Erfindung besitzt der Trommelmantel und ggf. auch die Bordscheiben einen mehrschaligen Aufbau mit zumindest zwei Wandungen aus faserverstärktem Verbundwerkstoff, die durch einen dazwischenliegenden Schaumkern voneinander beabstandet und miteinander verbunden sind. Die Faserverbund-Wandungen bilden verschleißfeste, druckstabile, harte Deckschichten, die den vergleichsweise sehr viel leichteren und empfindlicheren Schaumkern umhüllen und schützen. Durch die vergleichsweise geringere Dichte des Füllschaums kann im Vergleich zu einem Vollmaterialkorpus aus nur faserverstärktem Verbundwerkstoff eine weitere Gewichtsreduzierung erreicht werden. Gleichzeitig erhöht der Schaumkern und die hierdurch erzielte Beabstandung der Wandungen aus faserverstärktem Verbundwerkstoff die Formstabilität und Steifigkeit des mehrschalig aufgebauten Trommelmantels und/oder der mehrschalig aufgebauten Bordscheiben.

Gemäß der Erfindung besitzt der Schaumkern des Trommelmantels und ggf. auch der Bordscheiben eine Wandstärke, die sehr viel größer ist als die Wandstärke der Deckschichten bzw. Wandungen aus faserverstärktem Verbundwerkstoff. Dabei besitzen die Wandungen aus faserverstärktem Verbundwerkstoff jeweils eine Wandstärke, die weniger als 25 %, insbesondere auch weniger als 15 % der Wandstärke des Schaumkerns beträgt. Unabhängig hiervon sind die Wandstärken auf die zulässige Verformung des Trommelmantels abgestimmt.

Der genannte Schaumkern ist als Vollmaterialkorpus ausgebildet und füllt den Zwischenraum zwischen den Wandungen des Trommelmantels und ggf. auch den Zwischenraum zwischen den Wandungen der Bordscheiben aus faserverstärktem Verbundwerkstoff im Wesentlichen vollständig aus. Der Schaumkern bildet also keine Wabenstruktur oder Netzstruktur mit größeren Aussparungen, wobei der Schaumkern selbstverständlich die schaumtypische Bläschen- bzw. Zellstruktur eines Schaumstoffs gegebenenfalls mit beim Schäumen nicht zu vermeidenden Lunkern aufweisen kann.

Vorteilhafterweise findet als Schaumkern ein geschlossenzelliger Hartschaum Verwendung, beispielsweise in Form eines Polyurethanschaums oder eines Polystyrolschaums oder eines PVC-Schaums. Insbesondere kann der Schaumkern druckgeschäumt sein, um bei geringer Dichte eine hohe Steifigkeit aufzuweisen.

Die Wandungen des Trommelmantels und/oder der Bordscheiben aus faserverstärktem Verbundwerkstoff können insbesondere aus GFK oder CFK gefertigt sein. Die Faserverstärkung kann Glasfasern und/oder Kohlefasern und/oder Aramidfasern und gegebenenfalls auch Gemische hieraus umfassen, wobei die Faserverstärkung in Form von gewebten Fasermatten und/oder auch Faserfliesen mit zufälliger, wolkenförmiger Faserorientierung umfassen kann. Alternativ oder zusätzlich kann die Faserverstärkung auch aus gerichtet aufgebrachten Faserbündeln, beispielsweise gewickelten Fasersträngen bestehen oder solche umfassen.

Das die Faserverstärkung umgebende und/oder durchdringende Matrixmaterial kann in Weiterbildung der Erfindung ein aushärtbares Kunstharz, beispielsweise Polyester- oder Epoxidharz sein, mit dem die Fasern getränkt und/oder imprägniert und/oder laminiert werden.

Gemäß einem weiteren Aspekt der vorliegenden Erfindung kann der faserverstärkte Teil des Trommelmantels und/oder der Bordscheiben in einem Wickelverfahren hergestellt werden. Insbesondere kann zumindest eine Wandung des Trommelmantels und/oder zumindest eine Wandung der Bordscheiben gewickelt werden, wobei die Faserverstärkung in Form des vorgenannten Fasergewebes und/oder Faservlies und/oder Faserstrangs vorteilhafterweise mehrlagig gewickelt wird, sodass die Wandung aus faserverstärktem Verbundwerkstoff eine mehrlagige Faserverstärkung aufweist.

Die Wickelrichtung, in der das Faserverstärkungsmaterial gewickelt wird, kann hierbei grundsätzlich in verschiedener Weise gewählt werden. Nach einer vorteilhaften Ausführung der Erfindung kann das Faserverstärkungsmaterial zumindest im Bereich des Trommelmantels schraubenförmig gewickelt werden und/oder derart angeordnet werden, dass eine Faserhauptrichtung sich schraubenförmig um die Trommelachse windet. Bei mehrlagigem Aufbringen des Faserverstärkungsmaterials kann der Wickelvorgang und/oder das Anordnen der Faserverstärkung insbesondere derart ausgeführt werden, dass sich die Verstärkungsfasern in den verschiedenen Wickellagen im Kreuzgang mit gegenläufiger Schraubensteigung erstrecken, um eine besonders hohe Festigkeit zu erzielen.

Grundsätzlich kommt es aber auch in Betracht, zumindest eine Lage des Faserverstärkungsmaterials mit einer Hauptrichtung der Fasern parallel zur Umfangsrichtung und/oder parallel zur Achsrichtung des Trommelmantels anzuordnen.

Um bei höchstmöglicher Gewichtsreduzierung dennoch eine ausreichende Steifigkeit bzw. Festigkeit zu erreichen, kann nach einem weiteren Aspekt der Erfindung der Trommelmantel und/oder die Bordscheiben auch mit zumindest einer Versteifungsrippe ausgestattet werden, die aus faserverstärktem Verbundmaterial geformt werden kann und von einer Innenmantelfläche einer Mantelwandung des Trommelmantels nach innen zur Trommelmitte hin vorspringen kann und/oder von einer Seite der Bordscheibenwandung in axialer Richtung der Trommelachse vorspringen kann. Die genannte zumindest eine Versteifungsrippe kann dabei aus demselben faserverstärkten Verbundwerkstoff wie die Mantelwandung und/oder die Bordscheibenwandung gefertigt und integral einstückig daran angeformt werden. Alternativ kommt es aber auch in Betracht, die Versteifungsrippe aus einem anderen faserverstärkten Verbundwerkstoff zu fertigen als die Trommelmantelwandung und/oder die Bordscheibenwandung, an die die genannte Versteifungsrippe angebracht wird. Beispielsweise kann die Versteifungsrippe ein anderes Faserverstärkungsmaterial aufweisen als die zugehörige Wandung.

In Weiterbildung der Erfindung kann die zumindest eine Versteifungsrippe beim Herstellen der Mantelwandung und/oder Bordscheibenwandung mitgefertigt werden, insbesondere nass-in-nass an die Wandung angeformt werden, sodass das Matrixmaterial der Versteifungsrippe zumindest zeitweise überlappend mit dem Matrixmaterial der zugehörigen Wandung aushärtet.

Alternativ kann die Versteifungsrippe aber auch nachträglich an die zugehörige Mantelwandung bzw. die zugehörige Bordscheibenwandung angebracht werden, beispielsweise angeklebt und/oder je nach Matrixmaterial angeschweißt werden.

Die zumindest eine Versteifungsrippe kann am Trommelmantel sich vorteilhafterweise schraubenförmig entlang der Innenmantelfläche der Mantelwandung und/oder um die Trommelachse herum erstrecken. Alternativ oder zusätzlich kann aber auch eine sich konzentrisch, zumindest näherungsweise in Umfangsrichtung erstreckende Versteifungsrippe vorgesehen sein. Alternativ oder zusätzlich kann auch eine sich in Axialrichtung, das heißt näherungsweise parallel zur Trommelachse erstreckende Versteifungsrippe an dem Trommelmantel angebracht sein, wobei vorteilhafterweise mehrere solcher axialer Versteifungsrippen über den Umfang verteilt angeordnet sein können.

In Weiterbildung der Erfindung können auch verschieden konturierte Versteifungsrippen miteinander kombiniert werden. Beispielsweise kann zusätzlich zu mehreren axialen Versteifungsrippen eine schraubenförmige Versteifungsrippe und/oder mehrere konzentrische, sich in Umfangsrichtung erstreckende Versteifungsrippen vorgesehen sein, sodass sich einzelne Versteifungsrippen bzw. Versteifungsrippenabschnitte kreuzen. Hierdurch kann eine multiaxiale Versteifung erzielt werden.

Die genannten Versteifungsrippen können auch mit dem zuvor genannten Schaumkern kombiniert werden, gegebenenfalls aber auch ohne einen solchen Schaumkern Verwendung finden.

Die zumindest eine Versteifungsrippe kann eine Rippenhöhe aufweisen, die im Bereich von 50 % bis 300 % der Wandstärke der Mantelwandung oder Bordscheibenwandung aus faserverstärktem Verbundwerkstoff entspricht. Die Rippenbreite kann vorteilhafterweise weniger als 10 % der Gesamtlänge des Trommelmantels betragen.

Insbesondere kann zumindest eine Versteifungsrippe auch bei einer doppelschaligen Ausbildung des Trommelmantels und/oder der Bordscheiben vorgesehen werden, sodass sich die Versteifungsrippe zwischen zwei Wandungen des zweischaligen Aufbaus erstreckt. Die Versteifungsrippe kann dabei an zumindest einer der beiden Wandungen angeformt bzw. daran starr befestigt sein. Vorteilhafterweise kann die Versteifungsrippe an beiden voneinander beabstandeten Wandungen befestigt, insbesondere angeformt sein, sodass die beiden Wandungen des mehrschaligen Aufbaus durch die Versteifungsrippe miteinander verbunden sind.

Die Bordscheiben können mit dem Trommelmantel in verschiedener Weise verbunden sein. Nach einer vorteilhaften Weiterbildung der Erfindung können die Bordscheiben integral einstückig mit dem Trommelmantel verbunden sein, wobei sich vorteilhafterweise die Faserverstärkung durchgängig über den Verbindungs- bzw. Übergangsabschnitt zwischen Trommelmantel und Bordscheibe hinweg erstreckt, um eine feste und steife Anbindung der Bordscheiben an den Trommelmantel zu erzielen. Insbesondere kann ein materialhomogener Übergang zwischen der Trommelwandung aus faserverstärktem Verbundwerkstoff zu der Bordscheibenwandung aus faserverstärktem Verbundwerkstoff vorgesehen werden.

Alternativ können die Bordscheiben in Weiterbildung der Erfindung separat von dem Trommelmantel ausgebildet sein und nachträglich an dem Trommelmantel befestigt bzw. mit diesem verbunden werden.

In Weiterbildung der Erfindung können die Bordscheiben an die Stirnseite des Trommelmantels angesetzt sein, insbesondere kraftschlüssig und/oder formschlüssig gegen die Stirnseiten des Trommelmantels gedrückt sein.

Dabei können in Weiterbildung der Erfindung Zuganker vorgesehen sein, die im Trommelmantel verankert sind und die Bordscheiben gegen die Stirnseiten des Trommelmantels ziehen. Solche Zuganker können beispielsweise Schraubbolzen sein, die sich durch die Bordscheibe hindurch in den Trommelmantel erstrecken, wobei auf die Schraubbolzen aufschraubbare Muttern zum Festziehen der Bordscheiben vorgesehen sind, oder auch die Schraubbolzen selbst in den Trommelmantel eingeschraubt werden können, um die Bordscheiben festzuziehen.

Solche Zuganker können nachträglich in den Trommelmantel eingeschraubt sein oder auf andere Weise daran verankert sein, beispielsweise festgeklebt oder dübelartig aufgespreizt. Insbesondere können die Zuganker auch integral einstückig, insbesondere materialhomogen an den Trommelmantel angeformt sein, beispielsweise in Form von faserverstärkten Verbundwerkstoff-Zugankern, die an der faserverstärkten Verbundwerkstoffwandung des Trommelmantels befestigt sind.

Alternativ oder zusätzlich zu solchen Zugankern können die Bordscheiben auch über Zugstangen gegen die Stirnseiten des Trommelmantels gespannt werden. Solche Zugstangen können sich vorteilhafterweise durch die gesamte Länge des Trommelmantels hindurch erstrecken und durch die Bordscheiben an gegenüberliegenden Enden des Trommelmantels hindurchtreten, sodass die Zugstangen die beiden Bordscheiben aufeinander zu und damit gegen die Stirnseiten des Trommelmantels spannen. Solche Zugstangen können Schraubbolzen sein, die zumindest einseitig mit anziehbaren Muttern versehen sind.

Alternativ zu einem Ansetzen der Bordscheiben an die Stirnseiten des Trommelmantels können die Bordscheiben auch nach Art einer Hülse oder einer Kappe auf den Trommelmantel aufgeschoben und dort in der gewünschten Weise fixiert werden, beispielsweise durch Festkleben oder durch formschlüssige und/oder kraftschlüssige Haltemittel, beispielsweise in Form von Querbolzen und/oder Schraubbolzen.

In Weiterbildung der Erfindung kann der Trommelmantel außenumfangsseitig mit einer Seilrillung versehen sein, wobei eine solche Seilverrillung direkt in die Mantelwandung aus faserverstärktem Verbundwerkstoff eingebracht werden kann, sodass die Faserverbundwerkstoff-Trommelwandung außenumfangsseitig ein Rillenprofil aufweist. Das Einbringen der Verrillung kann dabei vorteilhafterweise direkt während der Trommelmantelherstellung erfolgen, sodass eine separate Bearbeitung beispielsweise in Form eines nachträglichen Einfräsens zur Erzeugung der Verrillung entfallen kann.

In Weiterbildung der Erfindung kann die Verrillung auf der Seiltrommel optional aber auch in eine separat auf den Trommelmantel aufgebrachte Deckschicht bzw. Ummantelung eingebracht werden, welche gleichzeitig als Verschleißschutz dienen kann.

Alternativ oder zusätzlich können auch die Endscheiben zumindest innenseitig, das heißt auf der dem Seilwickelbereich zugewandten Seite mit einer Deckschicht bzw. einer Verschleißschutzschicht versehen sein. Eine solche Deckschicht kann beispielsweise eine Kunststoffummantelung umfassen, die beispielsweise aufvulkanisiert werden kann, um einen gedämpften Seillauf und vorteilhafterweise geringe Reibwerte zum Seil zu erzeugen.

Die Erfindung wird nachfolgend anhand bevorzugter Ausführungsbeispiele und zugehöriger Zeichnungen näher erläutert. In den Zeichnungen zeigen:
- Fig. 1:: einen Längsschnitt durch eine Seiltrommel nach einer vorteilhaften Ausführungsform der Erfindung, bei der der Trommelmantel und die Bordscheiben jeweils einen doppelschaligen Aufbau mit einem Schaumkern und Faserverbundwerkstoff-Wandungen besitzen und die separat ausgebildeten Bordscheiben durch Zugstangen mit dem Trommelmantel verbunden sind,
- Fig. 2:: einen Längsschnitt durch eine Seiltrommel ähnlich Fig. 1 nach einer weiteren vorteilhaften Ausführung der Erfindung, bei der der Trommelmantel ähnlich Fig. 1 einen zweischaligen Aufbau mit einem Schaumkern und die Bordscheiben ebenfalls einen zweischaligen Aufbau allerdings mit Versteifungsrippen besitzen,
- Fig. 3:: einen Längsschnitt durch eine Seiltrommel nach einer weiteren vorteilhaften Ausführung der Erfindung, bei der der Trommelmantel zweischalig mit spiralförmigen Versteifungsrippen zwischen den beiden Mantelwandungen ausgebildet ist und die Bordscheiben nach Art einer Hülse auf den Trommelmantel aufgeschoben und dort fixiert sind,
- Fig. 4:: einen Längsschnitt durch eine Seiltrommel nach einer nicht erfindungsbemäßen Ausführung, bei der der Trommelmantel einwandig ausgebildet ist und an seiner Innenmantelseite spiralförmige Versteifungsrippen aufweist,
- Fig. 5:: einen Längsschnitt durch eine Seiltrommel nach einer nicht erfindungsbemäßen Ausführung, wobei der Trommelmantel an seiner Innenmantelseite mehrere über den Umfang verteilte Längsrippen aufweist,
- Fig. 6:: einen Längsschnitt durch eine weitere nicht erfindungsbemäße Seiltrommel, bei der die Bordscheiben ähnlich den Figuren 3 bis 5 auf den Trommelmantel aufgeschoben und dort durch Querbolzen gesichert sind, wobei auf der Außenmantelseite des Trommelmantels und den Innenseiten der Bordscheiben eine Oberflächenbeschichtung bzw. Ummantelung vorgesehen ist, die im Bereich des Trommelmantels eine Rillung ausbildet,
- Fig. 7:: einen Längsschnitt durch eine nicht erfindungsbemäße Seiltrommel ähnlich Fig. 6, wobei die Bordscheiben auf den Trommelmantel aufgeschoben und dort stoffschlüssig verbunden bzw. fixiert sind,
- Fig. 8:: einen Längsschnitt durch eine nicht erfindungsbemäße Seiltrommel ähnlich Fig. 7, wobei die separat ausgebildeten Bordscheiben durch Zugstangen stirnseitig gegen die Trommelmantelwandung gespannt sind,
- Fig. 9:: eine nicht erfindungsbemäße Seiltrommel ähnlich Fig. 7, wobei die separat ausgebildeten Bordscheiben mittel Zuganker, die im Trommelmantel verankert sind, gegen die Stirnseiten des Trommelmantels gespannt sind,
- Fig. 10:: einen Längsschnitt durch eine nicht erfindungsbemäße Seiltrommel ähnlich den Figuren 8 und 9. wobei die Bordscheiben integral einstückig, materialhomogen mit dem Trommelmantel verbunden sind, und
- Fig. 11:: einen Längsschnitt durch eine nicht erfindungsbemäße Seiltrommel ähnlich Fig. 10, wobei die Seilrillung an der Außenmantelfläche des Trommelmantels direkt in dem faserverstärkten Verbundwerkstoff der Trommelmantelwandung eingebracht ist.

Die in den Figuren gezeigten Seiltrommeln 1 umfassen jeweils einen grob gesprochen zylindrischen Trommelmantel 2, an dessen axialen Enden jeweils eine Bordscheibe 3 angeschlossen ist. Die genannten Bordscheiben 3 erstrecken sich grob gesprochen senkrecht zur Trommellängsachse L und springen von der Trommelmantelfläche radial nach außen vor, sodass die Bordscheiben 3 einen deutlich größeren Durchmesser als der Trommelmantel 2 besitzen.

Die gezeigte Seiltrommel 1 kann hierbei insbesondere im Hubwerk eines Krans wie beispielsweise eines Turmdrehkrans oder einem mobilen Teleskopkran oder einem Auslegermastverstellwerk, aber auch in anderen Seilwinden Verwendung finden. Die genannten Bordscheiben 3 können mit dem Trommelmantel 2 grundsätzlich in verschiedener Art und Weise verbunden sein, wie dies noch erläutert wird.

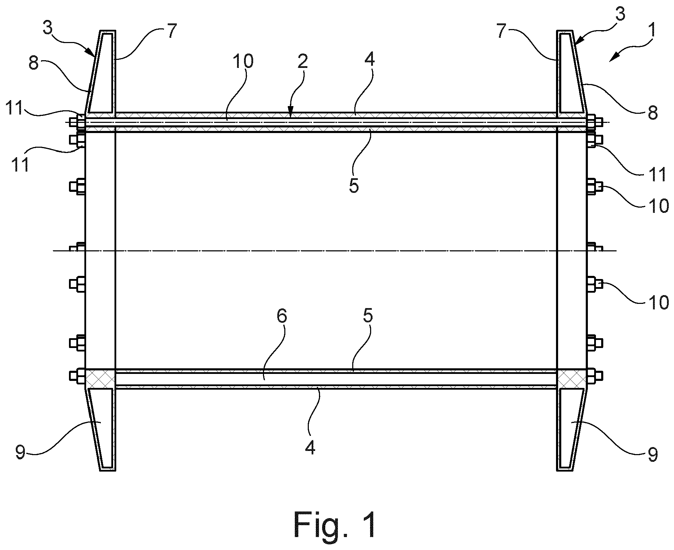

Wie Figur 1 zeigt, kann der Trommelmantel 2 einen mehrschaligen Aufbau besitzen und zwei im Wesentlichen zylindrische, vorzugsweise koaxial angeordnete Mantelwandungen 4 und 5 aufweisen, die jeweils aus einem faserverstärktem Verbundwerkstoff gefertigt sind, beispielsweise GFK oder CFK.

Zwischen den beiden Mantelwandungen 4 und 5 des Trommelmantels 2 ist sandwichartig ein Schaumkern 6 aufgenommen, der zumindest näherungsweise ebenfalls zylindrisch konturiert sein kann. Der Schaumkern 6 füllt im Wesentlichen vollständig den Zwischenraum zwischen den beiden Mantelwandungen 4 und 5 aus und steht mit beiden Wandungen flächig in Kontakt. Insbesondere können die beiden Mantelwandungen 4 und 5 aus faserverstärktem Verbundwerkstoff Deckschichten bilden, die den Schaumkern 6 innen- und außenseitig bedecken und schützen.

Der Schaumkern 6 hält die beiden Mantelwandungen 4 und 5 auf Abstand und verbindet diese miteinander, wobei der Schaumkern 6 kraftschlüssig und/oder stoffschlüssig mit den beiden Mantelwandungen 4 und 5 flächig, insbesondere vollflächig verbunden sein kann.

Insbesondere kann der Schaumkern 6 durch Ausschäumen des Zwischenraums zwischen den beiden Mantelwandungen 4 und 5 gefertigt sein, sodass sich der Schaumkern 6 unter Druck gegen die Mantelwandungen 4 und 5 legt und mit diesen eine Verbindung eingeht.

Wie Figur 1 zeigt, können auch die Bordscheiben 3 einen mehrschaligen, insbesondere doppelschaligen Aufbau besitzen und zwei voneinander beabstandete, sich zumindest näherungsweise radial erstreckende Scheibenwandungen 7 und 8 aufweisen, die aus faserverstärktem Verbundwerkstoff gefertigt sind. Zwischen diesen Scheibenwandungen 7 und 8 kann ebenfalls ein Schaumkern 9 eingebracht sein, der die beiden Scheibenwandungen 7 und 8 auf Abstand hält und miteinander verbindet, wobei der genannte Schaumkern 9 den Hohlraum zwischen den beiden Scheibenwandungen 7 und 8 vorteilhafterweise im Wesentlichen vollständig ausfüllen kann. Der Schaumkern 9 der Bordscheiben 3 kann analog zum Schaumkern 6 des Trommelmantels 2 gefertigt bzw. ausgebildet sein.

Wie Figur 1 ferner zeigt, besitzen die Wandungen 4 und 5 bzw. 7 und 8 des Trommelmantels 2 bzw. der Bordscheiben 3 aus faserverstärktem Verbundwerkstoff eine Wandstärke, die deutlich kleiner ist als die Wandstärke des Schaumkerns 6 bzw. 9, nämlich kleiner als 25 % oder auch kleiner als 10 % der Wandstärke des Schaumkerns.

Wie Figur 1 ferner zeigt, können die Bordscheiben 3 separat von dem Trommelmantel 2 gefertigt sein und nachträglich am Trommelmantel 2 befestigt sein. Insbesondere können die Bordscheiben 3 gegen die Stirnseiten des Trommelmantels 2 gesetzt und daran befestigt sein, wobei, wie Figur 1 zeigt, Zugstangen 10 Verwendung finden können, die sich über die gesamte Länge des Trommelmantels 2 und auch durch die Bordscheiben 3 hindurch erstrecken können. Durch Spannmittel am Ende der Zugstangen 10 beispielsweise in Form von darauf aufgeschraubten Muttern 11 können die Bordscheiben 3 axial gegen die den Trommelmantel 2 gespannt werden.

Die genannten Zugstangen 10 können sich vorteilhafterweise durch den Trommelmantel 2 hindurch erstrecken, insbesondere dessen Schaumkern 6 durchdringen.

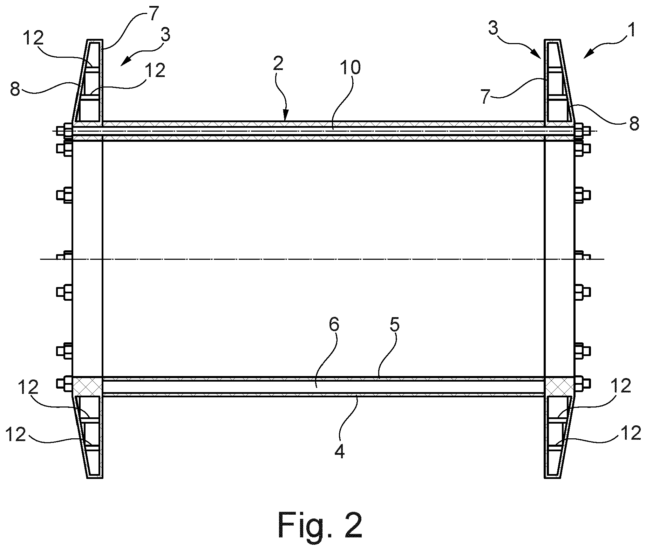

Wie Figur 2 zeigt, können der Trommelmantel 2 einerseits und die Bordscheiben 3 andererseits einen unterschiedlichen Aufbau bzw. eine unterschiedliche Struktur besitzen. Während gemäß Figur 2 der Trommelmantel 2 im Wesentlichen den zweischaligen Aufbau mit Schaumkern gemäß Figur 1 besitzt, können die Bordscheiben 3 durch Versteifungsrippen 12 ausgesteift sein.

Wie Figur 2 zeigt, können die Bordscheiben 3 dabei wiederum einen mehrschaligen Aufbau mit zwei sich näherungsweise radial erstreckenden, voneinander beabstandeten Scheibenwandungen 7 und 8 besitzen. Zwischen den genannten Scheibenwandungen 7 und 8 sind mehrere spiralförmige oder konzentrische oder radiale Versteifungsrippen 12 vorgesehen, die die beiden sich näherungsweise radial erstreckenden Scheibenwandungen 7 und 8 miteinander verbinden. Die genannten Versteifungsrippen 12 springen von der Scheibenwandung 7, die den Wickelraum über dem Trommelmantel 2 begrenzt, in axialer Richtung nach außen vor, bis sie die zweite Scheibenwandung 8 erreichen.

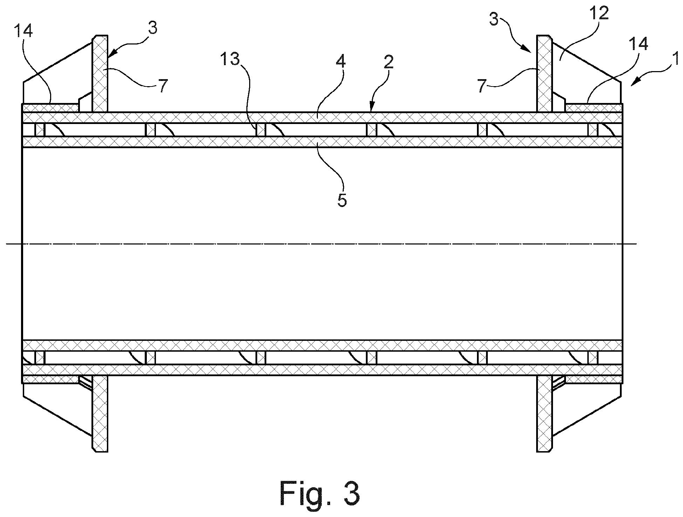

Wie Figur 2 zeigt, können die Versteifungsrippen 12 ohne Schaumkern die beiden Scheibenwandungen 7 und 8 miteinander verbinden. Alternativ wäre es jedoch auch möglich, zusätzlich zu den Versteifungsrippen 12 den verbleibenden Zwischenraum auch noch auszuschäumen bzw. mit einem Schaumkern 6 zu füllen. Wie Figur 3 zeigt, kann auch der Trommelmantel 2 der Seiltrommel 1 einen mehrschaligen Aufbau mit einer oder mehreren Versteifungsrippen zwischen Mantelwandungen 4 und 5 aufweisen. In der in Figur 3 gezeigten Ausführung ist zwischen den Mantelwandungen 4 und 5 des Trommelmantels 2 eine spiralförmige bzw. schraubenförmige Versteifungsrippe 13 vorgesehen, die sich um die Trommelachse L herum verschraubt bzw. entlang der Innenmantelfläche und der Außenmantelfläche der beiden Mantelwandungen 4 und 5 erstreckt. Vorteilhafterweise erstreckt sich die Versteifungsrippe 13 dabei im Wesentlichen über die gesamte Länge des Trommelmantels 2.

Wie Figur 3 zeigt, kann auch in einem nicht erfindungsgemäßen Ausführungsbeispiel im Trommelmantel 2 allein die zumindest eine Versteifungsrippe 13 zwischen den beiden Mantelwandungen 4 und 5 vorgesehen sein. Nach einer weiteren vorteilhaften Ausführung der Erfindung kann die Versteifungsrippe 13 aber auch mit einem Schaumkern 6 kombiniert werden, der die verbleibenden Zwischenräume zwischen den beiden Mantelwandungen 4 und 5 ausfüllt.

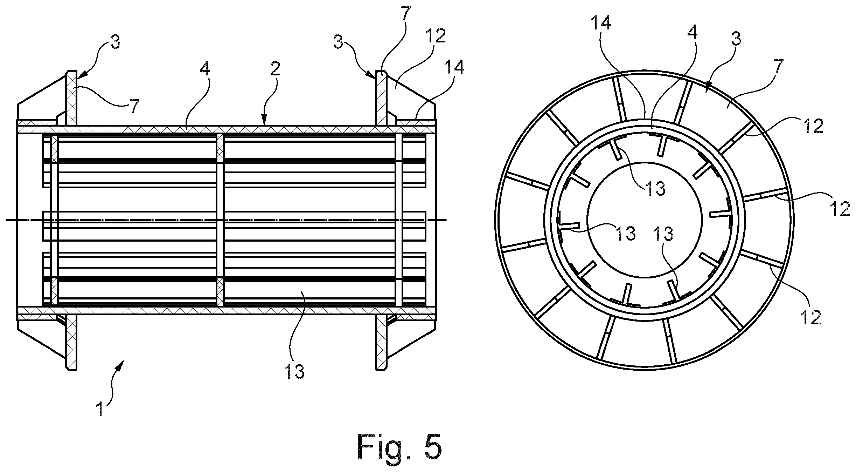

Wie Figur 5 zeigt, kann in einer nicht erfindungsbemäßen Ausführung der Trommelmantel 2 aber auch mit Versteifungsrippen anderer Konturierung ausgesteift werden, insbesondere mit mehreren axialen Versteifungsrippen 13, die sich im Wesentlichen parallel zur Längsachse L des Trommelmantels 2 an einer Innenseite der Mantelwandung 4 erstrecken können. Dabei zeigt Figur 5 einen einschaligen Aufbau des Trommelmantels 2, der in diesem Fall nur eine Mantelwandung 4 aus faserverstärktem Verbundwerkstoff besitzt. Gleichwohl können die Figur 5 gezeigten axialen Versteifungsrippen 13 auch bei einem mehrschaligen Aufbau des Trommelmantels 2 Verwendung finden und sich dann zwischen zwei voneinander beabstandeten Mantelwandungen 4 und 5 erstrecken und diese miteinander verbinden.

Nicht eigens gezeigt sind Versteifungsrippen, die sich koaxial also im Wesentlichen in Umfangsrichtung des Trommelmantels 2 erstrecken können und vorteilhafterweise in Richtung der Längsachse L verteilt angeordnet sein können.

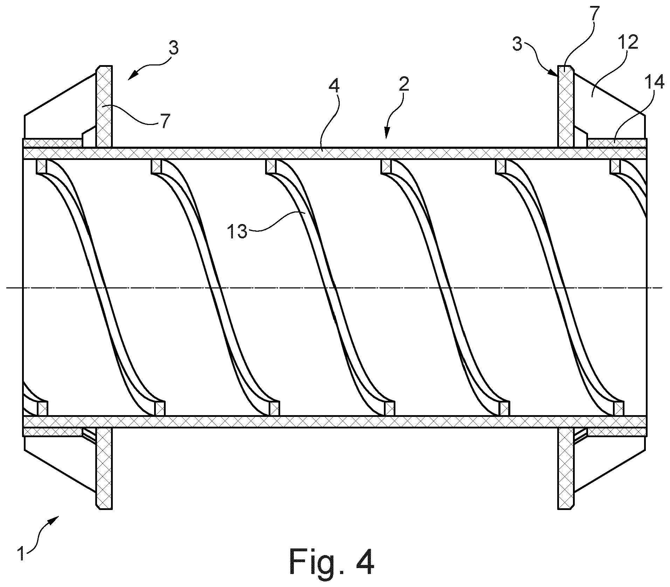

Wie ferner Figur 4 zeigt, kann gemäß einer nicht erfindungsbemäßen Ausführung ein einschaliger Trommelmantel 2 auch durch eine schraubenförmige Versteifungsrippe 13 oder mehrere solcher schraubenförmiger Versteifungsrippen 13 ausgesteift sein, wobei die zumindest eine Versteifungsrippe 13 sich an einer Innenmantelseite der Mantelwandung 4 erstrecken und von dieser nach innen zum Trommelzentrum hin vorspringen kann, vgl. Figur 4.

Wie die Figuren 3 bis 5 zeigen, können die separat ausgebildeten Bordscheiben 3 nicht nur axial gegen die Stirnseiten des Trommelmantels 2 gespannt werden, sondern nach Art einer Hülse oder einer Kappe auch auf den Umfang des Trommelmantels 2 passgenau aufgeschoben sein bzw. auf dem Außenumfang des Trommelmantels 2 sitzen.

Die Bordscheiben 3 können dabei eine sich zumindest näherungsweise radial erstreckende Scheibenwandung 7 aufweisen und einen näherungsweise zylindrischen Hülsenabschnitt 14 aufweisen, der auf dem Trommelmantel 2 sitzen kann. Die Scheibenwandung 7 kann mit dem genannten Hülsenabschnitt 14 durch mehrere Versteifungsrippen 12 verbunden sein, die sich beispielsweise in axialer Richtung erstrecken können und näherungsweise radial angeordnet sein können. Vorteilhafterweise sind die Scheibenwandung 7 und der Hülsenabschnitt 14 integral einstückig mit den Versteifungsrippen 12 ausgebildet und jeweils aus einem faserverstärktem Verbundwerkstoff gefertigt.

Die auf den Trommelmantel 2 aufgeschobenen Bordscheiben 3 können dort in verschiedener Weise gesichert bzw. befestigt werden. Beispielsweise kann der genannte Hülsenabschnitt 14 stoff- und oder kraftschlüssig am Trommelmantel 2 fixiert werden, beispielsweise daran festgeklebt sein.

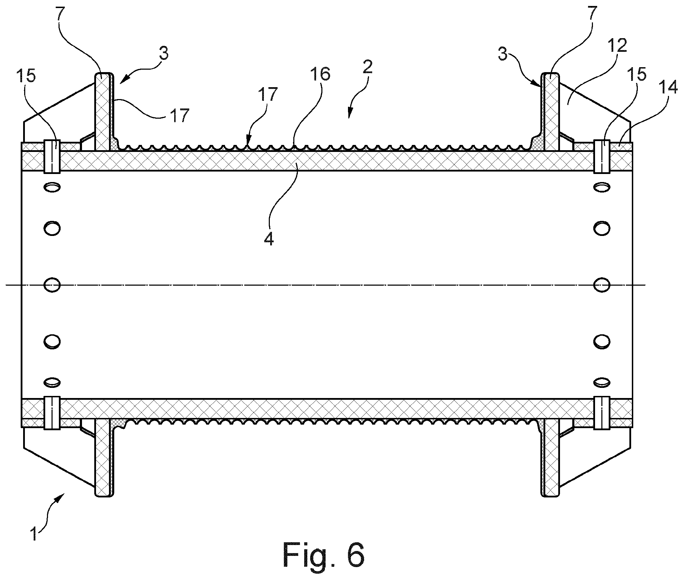

Alternativ oder zusätzlich zu einer stoff- und/oder kraftschlüssigen Verbindung können die aufgeschobenen Bordscheiben 3 am Trommelmantel 2 aber auch formschlüssig gesichert bzw. fixiert sein, insbesondere durch einen oder mehrere Querbolzen 15, wie dies beispielsweise Figur 6 zeigt. Die genannten Querbolzen 15 können sich durch miteinander fluchtende Bohrungen erstrecken, die im Hülsenabschnitt 14 der Bordscheiben 3 und dem Trommelmantel 2 ausgebildet sein können.

Wie Figur 6 ferner zeigt, kann der Trommelmantel 2 außenumfangsseitig mit einer Verrillung 16 versehen sein, um das auflaufende Seil zu führen. Die Verrillung 16 kann dabei durch eine Deckschicht bzw. Ummantelung 17 gebildet sein, die auf der Außenumfangsseite des Trommelmantels 2, insbesondere der zuvor beschriebenen Mantelwandung 4 aus faserverstärktem Verbundwerkstoff aufgebracht sein kann. Die die Verrillung 16 bildende Ummantelung 17 kann dabei aus Kunststoff gefertigt, beispielsweise aufvulkanisiert sein, um eine gewisse Dämpfung zu erzielen und den Verschleiß des aufzuwickelnden Seils zu reduzieren.

Alternativ oder zusätzlich können auch die Bordscheiben 3 zumindest innenflächenseitig mit einer solchen Ummantelung 17 als Deckschicht versehen sein, vgl. Figur 6.

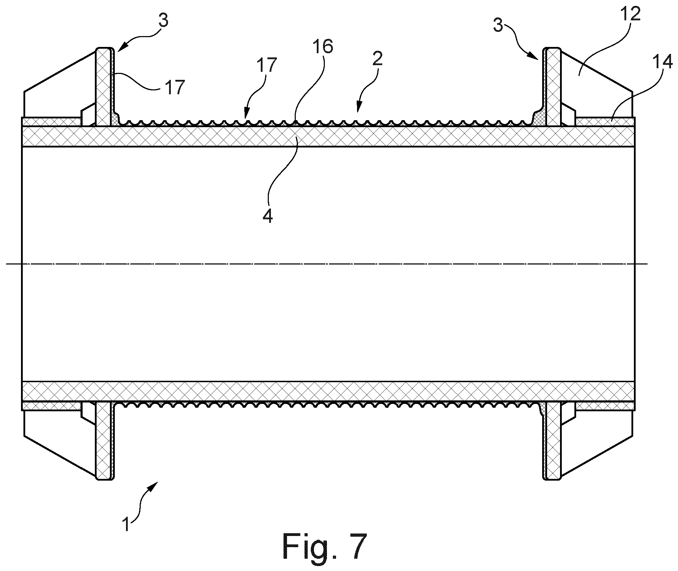

Während Figur 6 wiederum die Verbolzung der Bordscheiben 3 am Trommelmantel 2 zeigt, können die Bordscheiben 3 auch stoffschlüssig bzw. kraftschlüssig am Trommelmantel 2 befestigt sein, wie dies Figur 7 zeigt. Beispielsweise kann der Hülsenabschnitt 14 der jeweiligen Bordscheiben 3 am Trommelmantel 2 aufgeklebt sein.

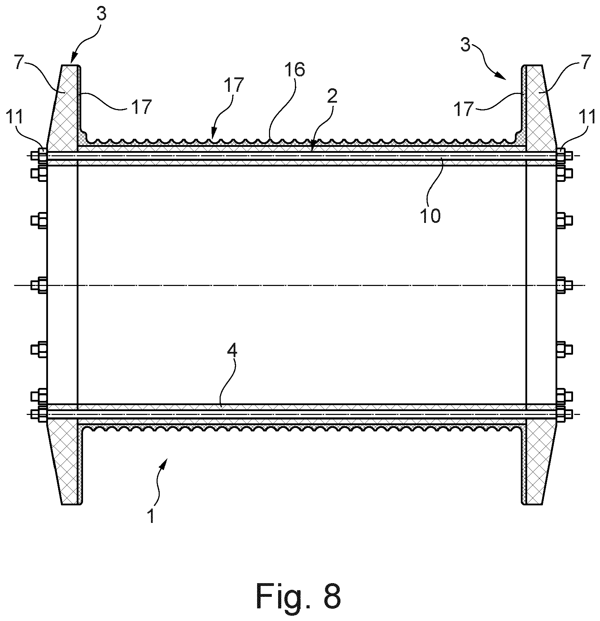

Wie Figur 8 verdeutlicht, kann die Ummantelung 17 bzw. die Verrillung 16 auch mit Bordscheiben 3 kombiniert werden, die stirnseitig gegen den Trommelmantel 2 gespannt bzw. gesetzt werden und mit Zugstanden 10 gesichert und befestigt werden.

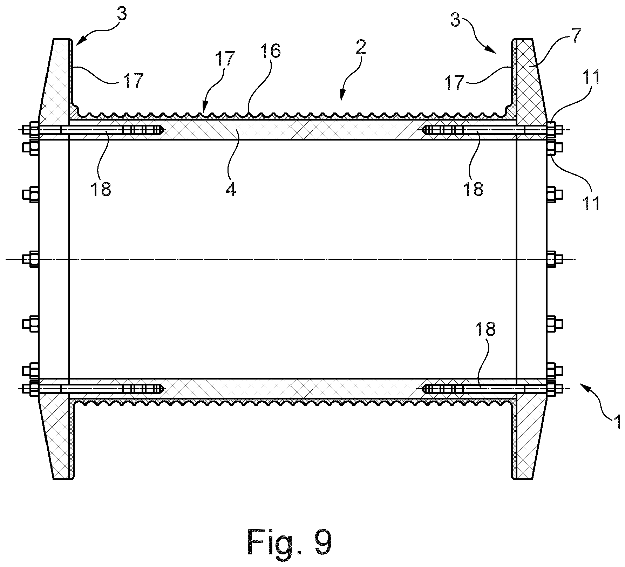

Figur 9 zeigt eine ähnliche Ausführung wie Figur 8, wobei anstelle der durchgehenden Zugstangen 10 zum Befestigen der Bordscheiben 3 Zuganker 18 verwendet sind, die im Trommelmantel 2 verankert sind und stirnseitig aus diesem vorstehen, um durch die Bordscheiben 3 hindurchzutreten. Durch Spannmittel beispielsweise in Form von aufschraubbaren Muttern (11) können die Bordscheiben 3 über die Zuganker 18 gegen die Stirnseite des Trommelmantels 2 gezogen werden.

Vorteilhafterweise sind die genannten Zuganker 18 in einer der Mantelwandungen 4 bzw. 5 des Trommelmantels 2 aus faserverstärktem Verbundwerkstoff verankert, wobei die Zuganker 18 daran nachträglich eingeschraubt oder auch integral einstückig daran ausgebildet sein können, beispielsweise in Form von vorstehenden Ankerbolzen aus faserverstärktem Verbundwerkstoff oder eingewickelten Ankerbolzen.

Klarzustellen ist, dass solche Zuganker 18 dabei auch bei doppelschalig bzw. mehrschalig ausgebildeten Trommelmänteln 2 Verwendung finden können, wie sie beispielsweise in den Figuren 1 bis 3 gezeigt sind, auch wenn Figur 9 nur einen einschaligen Trommelmantel 2 zeigt.

Selbiges gilt auch für die Verrillung 16 bzw. die Ummantelung 17 und/oder die Befestigung der Bordscheiben 3, wie sie die Figuren 6 bis 8 zeigen. Insbesondere kann die die Verrillung 16 bildende Ummantelung 17 auch bei den zuvor beschriebenen Ausführungen nach den Figuren 1 bis 5 Verwendung finden. Auch die Ummantelung 17 an der Innenseite der Bordscheiben 3 kann dort Verwendung finden.

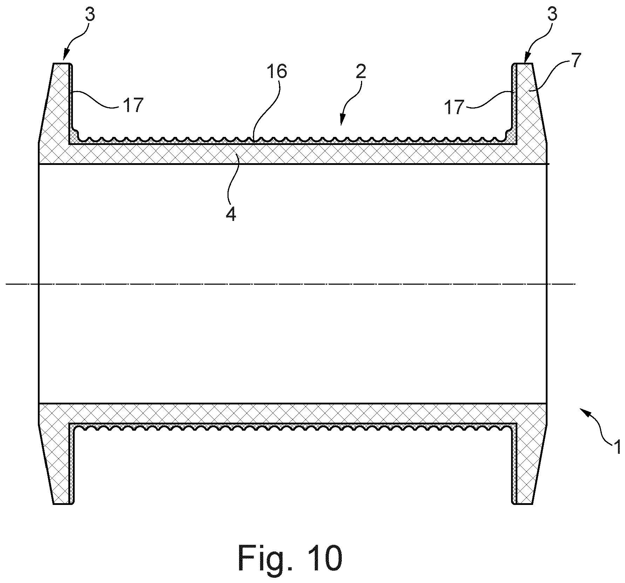

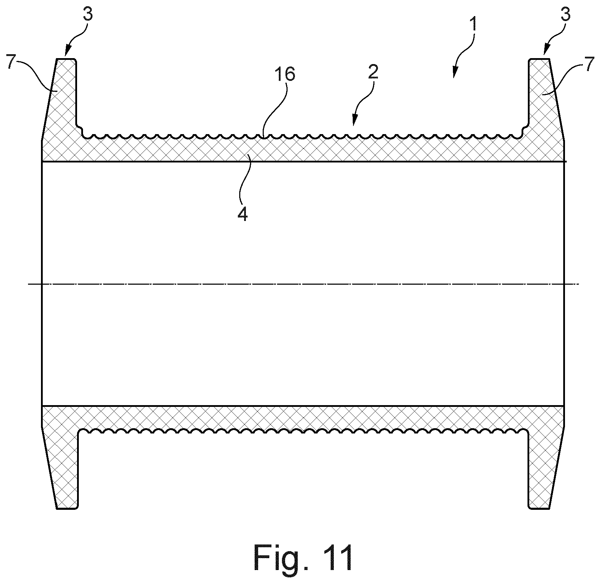

Wie die Figuren 10 und 11 zeigen, können die Bordscheiben 3 auch integral einstückig, insbesondere materialhomogen mit dem Trommelmantel 2 verbunden bzw. daran angeformt sein. Dies gilt unabhängig von der in den Figuren 10 und 11 gezeigten einschaligen bzw. einwandigen Struktur des Trommelmantels 2 bzw. der Bordscheiben 3, sodass auch die mehrschaligen Ausführungsoptionen gemäß den zuvor beschriebenen Figuren 1 bis 3 mit integral einstückig angeformten Bordscheiben 3 ausgebildet werden können.

Während Figur 10 eine Verrillung 16 zeigt, die durch eine nachträgliche Beschichtung bzw. Ummantelung 17 auf der Außenseite des Trommelmantels 2 ausgebildet ist, kann die besagte Verrillung 16 auch direkt in das faserverstärkte Verbundwerkstoffmaterial der Trommelmantelwandung 4 eingebracht sein, vgl. Figur 11.

## Patentansprüche

1. Seiltrommel für eine Seilwinde eines Seiltriebs, mit einem Trommelmantel (2) sowie zwei endseitig an den Trommelmantel (2) angrenzenden Bordscheiben (3), wobei der Trommelmantel (2) und ggf. auch die Bordscheiben (3) aus faserverstärktem Verbundwerkstoff gefertigt sind, wobei der Trommelmantel (2) einen mehrschaligen Aufbau mit zumindest zwei Wandungen (4,5; 7,8) aus faserverstärktem Verbundwerkstoff besitzt, die durch einen Schaumkern (6; 9) voneinander beabstandet und miteinander verbunden sind, **dadurch gekennzeichnet, dass** die Wandungen (4,5; 7,8) aus faserverstärktem Verbundwerkstoff jeweils eine Wandstärke besitzen, die weniger als 25 % der Wandstärke des Schaumkerns (6; 9) beträgt, wobei der Schaumkern (6; 9) aus einem geschlossenzelligen Hartschaum als Vollkorpus geschäumt ist und den Zwischenraum zwischen den Wandungen (4,5; 7,8) vollständig ausfüllt.

2. Seiltrommel nach dem vorhergehenden Anspruch, wobei der Schaumkern (6; 9) aus einem Polyurethan-, Polystyrol- oder Polyvinylchlorid-Schaum geschäumt ist.

3. Seiltrommel nach einem der vorhergehenden Ansprüche, wobei der Trommelmantel (2) und/oder die Bordscheiben (3) durch zumindest eine Versteifungsrippe (12; 13) verstärkt ist/sind, die aus faserverstärktem Verbundmaterial geformt ist und von einer Innenmantelfläche einer Mantelwandung (4) des Trommelmantels (2) aus faserverstärktem Verbundwerkstoff zur Trommelinnenseite hin vorspringt und/oder von einer Scheibenwandung (7) der Bordscheibe (3) in axialer Richtung der Längsachse (L) des Trommelmantels (2) vorspringt.

4. Seiltrommel nach einem der vorhergehenden Ansprüche, wobei sich zumindest eine Versteifungsrippe (12; 13) zwischen zwei Mantelwandungen (4,5) des Trommelmantels (2) und/oder zwischen zwei Scheibenwandungen (7,8) einer Bordscheibe (3) erstreckt und die beiden Mantelwandungen (4,5) oder die beiden Scheibenwandungen (7,8) miteinander verbindet, wobei die zumindest eine Versteifungsrippe (12; 13) in den Schaumkern (6; 9) zwischen den Mantelwandungen (4,5) und/oder zwischen den Scheibenwandungen (7,8) eingeschäumt ist.

5. Seiltrommel nach einem der vorhergehenden Ansprüche, wobei an dem Trommelmantel (2) mehrere axiale Versteifungsrippen (13), die sich zumindest näherungsweise parallel zur Längsachse (L) des Trommelmantels (2) erstrecken, und/oder mehrere konzentrische Versteifungsrippen, die sich in voneinander beabstandeten Ebenen senkrecht zur Längsachse (L) des Trommelmantels (2) erstrecken, vorgesehen sind.

6. Seiltrommel nach einem der vorhergehenden Ansprüche, wobei die zumindest eine Versteifungsrippe (12; 13) eine Rippenhöhe aufweist, die im Bereich von 50 % bis 250 % oder 75 % bis 125 % der Wandstärke der Wandung (4,5; 7,8) aus faserverstärktem Verbundwerkstoff beträgt.

7. Seiltrommel nach einem der vorhergehenden Ansprüche, wobei der Trommelmantel (2) zumindest eine Mantelwandung (4,5) aus einem faserverstärkten Verbundwerkstoff mit einer mehrlagigen Faserverstärkung umfasst, wobei die mehrlagige Faserverstärkung in den verschiedenen Faserverstärkungslagen unterschiedliche Faserhauptrichtungen aufweist, wobei der Trommelmantel (2) zumindest eine Mantelwandung (4,5) aufweist, in der die Faserverstärkung des faserverstärktem Verbundwerkstoffs derart ausgerichtet ist, dass sich eine Faserhauptrichtung schraubenförmig um die Längsachse (L) des Trommelmantels (2) herum erstreckt, insbesondere mehrlagig im Kreuzgang mit gegenläufigen Schraubensteigungen.

8. Seiltrommel nach einem der vorhergehenden Ansprüche, wobei der Trommelmantel (2) mit einer Verrillung (16) versehen ist, die unmittelbar in dem faserverstärktem Verbundwerkstoff des Trommelmantels (2) ausgebildet ist.

9. Seiltrommel nach einem der vorhergehenden Ansprüche, wobei der Trommelmantel (2) mit einer Ummantelung (17) versehen ist, die eine Verrillung (16) aufweist, wobei die Ummantelung (17) vorteilhafterweise auf den faserverstärkten Verbundwerkstoff aufvulkanisiert ist und/oder die Bordscheiben (3) mit einer Ummantelung (17) versehen sind, die auf eine Scheibenwandung (7) aus faserverstärktem Verbundwerkstoff aufgebracht, insbesondere aufvulkanisiert ist.

10. Seiltrommel nach einem der vorhergehenden Ansprüche, wobei die Bordscheiben (3) integral einstückig, materialhomogen an den Trommelmantel (2) angeformt sind, wobei sich eine Faserverstärkung durchgängig über den Übergangsbereich zwischen Trommelmantel (2) und Borscheibe (3) hinwegerstreckt.

11. Seiltrommel nach einem der Ansprüche 1 bis 9, wobei die Bordscheiben (3) vom Trommelmantel (2) separat ausgebildet und nachträglich mit dem Trommelmantel (2) verbunden sind, wobei die Bordscheiben (3) an Stirnseiten des Trommelmantels (2) angesetzt und durch Zugstangen (10) oder Zuganker (18) gegen die Stirnseiten des Trommelmantels (2) gespannt sind, wobei sich die Zuganker (10) durch den Schaumkern (6) des Trommelmantels (2) erstrecken und/oder die Zuganker (18) in einer Mantelwandung (4, 5) aus faserverstärktem Verbundwerkstoff verankert sind.

12. Seiltrommel nach einem der vorhergehenden Ansprüche, wobei die Bordscheiben (3) hülsen- oder kappenartig auf dem Trommelmantel (2) sitzen.

13. Seilwinde mit einer Seiltrommel (1), die gemäß einem der vorhergehenden Ansprüche ausgebildet ist.

14. Verfahren zur Herstellung einer Seiltrommel, die gemäß einem der Ansprüche 1 bis 12 ausgebildet ist und einen Trommelmantel (2) sowie zwei endseitig an den Trommelmantel (2) angrenzende Bordscheiben (3) aufweist, wobei der Trommelmantel (2) und ggf. auch die Bordscheiben (3) aus einem faserverstärktem Verbundwerkstoff gefertigt werden, **dadurch gekennzeichnet, dass** zumindest eine Wandung des Trommelmantels (2) durch Wickeln eines Faserverstärkungswerkstoffs aufgebaut wird, wobei der vor oder nachher mit einem Matrixwerkstoff durchtränkte Faserverstärkungswerkstoff nach dem Wickeln ausgehärtet wird, wobei zwei voneinander beabstandete Wandungen (4,5) aus faserverstärktem Verbundwerkstoff ausgebildet und ein dazwischenliegender Zwischenraum mit einem geschlossenzelligen Hartschaum vollständig ausgeschäumt werden.

## Claims

1. A hoist drum for a hoist winch of a rope drive, having a drum jacket (2) as well as two guard plates (3) adjacent to the drum jacket (2) at the end sides, wherein the drum jacket (2) and optionally also the guard plates (3) are produced from fiber reinforced composite material, wherein the drum jacket (2) has a multi-shell structure with at least two walls (4, 5; 7, 8) of fiber reinforced composite material, which are spaced apart from one another and connected to one another by a foam core (6; 9), **characterized in that** the walls (4, 5; 7, 8) of fiber reinforced composite material each have a wall thickness that is less than 25% of the wall thickness of the foam core (6; 9), wherein the foam core (6; 9) is foamed from a closed cell hard foam as a full carcass and completely fills the intermediate space between the walls (4, 5; 7, 8).

2. A hoist drum in accordance with the preceding claim, wherein the foam core (6; 9) is foamed from a polyurethane, polystyrene, or polyvinyl chloride foam.

3. A hoist drum in accordance with one of the preceding claims, wherein the drum jacket (2) and/or the guard plates (3) is/are reinforced by at least one stiffening rib (12; 13) that is formed from fiber reinforced composite material and projects toward the inner drum side from an inner jacket surface of a jacket wall (4) of the drum jacket (2) of fiber reinforced composite material and/or projects from a plate wall (7) of the guard plate (3) in an axial direction of the longitudinal axis (L) of the drum jacket (2).

4. A hoist drum in accordance with one of the preceding claims, wherein at least one stiffening rib (12; 13) extends between two jacket walls (4, 5) of the drum jacket (2) and/or between two plate walls (7, 8) of a guard plate (3) and connects the two jacket walls (4, 5) or the two plate walls (7, 8) to one another, wherein the at least one stiffening rib (12; 13) is foamed into the foam core (6; 9) between the jacket walls (4, 5) and/or between the plate walls (7, 8).

5. A hoist drum in accordance with one of the preceding claims, wherein a plurality of axial stiffening ribs (13) that extend at least approximately in parallel with the longitudinal axis (L) of the drum jacket (2) are provided at the drum jacket (2), and/or a plurality of concentric stiffening ribs are provided that extend in mutually spaced apart planes perpendicular to the longitudinal axis (L) of the drum jacket (2).

6. A hoist drum in accordance with one of the preceding claims, wherein the at least one stiffening rib (12; 13) has a rib height that is in the range from 50% to 250% or 75% to 125% of the wall thickness of the wall (4, 5; 7, 8) of fiber reinforced composite material.

7. A hoist drum in accordance with one of the preceding claims, wherein the drum jacket (2) comprises at least one jacket wall (4, 5) of a fiber reinforced composite material having a multilayer fiber reinforcement, wherein the multilayer fiber reinforcement has different main fiber directions in the different fiber reinforcement layers, wherein the drum jacket (2) has at least one jacket wall (4, 5) in which the fiber reinforcement of the fiber reinforced composite material is aligned such that a main fiber direction extends helically around the longitudinal axis (L) of the drum jacket (2), in particular in multiple layers in cross-coating with oppositely running helical pitches.

8. A hoist drum in accordance with one of the preceding claims, wherein the drum jacket (2) is provided with a grooving (16) that is formed directly in the fiber reinforced composite material of the drum jacket (2).

9. A hoist drum in accordance with one of the preceding claims, wherein the drum jacket (2) is provided with a jacketing (17) that has a grooving (16), wherein the jacketing (17) is advantageously vulcanized onto the fiber reinforced composite material and/or the guard plates (3) are provided with a jacketing (17) that is applied, in particular vulcanized, onto a plate wall (7) of fiber reinforced composite material.

10. A hoist drum in accordance with one of the preceding claims, wherein the guard plates (3) are molded integrally in one piece, with material homogeneity, to the drum jacket (2), wherein a fiber reinforcement extends continuously over the transition region between the drum jacket (2) and the guard plate (3).

11. A hoist drum in accordance with one of claims 1 to 9, wherein the guard plates (3) are formed separately from the drum jacket (2) and are subsequently connected to the drum jacket (2), wherein the guard plates (3) are set at end faces of the drum jacket (2) and are tensioned toward the end faces of the drum jacket (2) by pull rods (10) or tie rods (18), wherein the tie rods (10) extend through the foam core (6) of the drum jacket (2) and/or the tie rods (18) are anchored in a jacket wall (4, 5) of fiber reinforced composite material.

12. A hoist drum in accordance with one of the preceding claims, wherein the guard plates (3) are seated in a sleeve-like or cap-like manner on the drum jacket (2).

13. A hoist winch having a hoist drum (1) that is configured in accordance with one of the preceding claims.

14. A method of producing a hoist drum, which is configured in accordance with one of claims 1 to 12 and has a drum jacket (2) as well as two guard plates (3) adjacent to the drum jacket (2) at the end sides, wherein the drum jacket (2) and optionally also the guard plates (3) are produced from a fiber reinforced composite material, **characterized in that** at least one wall of the drum jacket (2) is built up by winding a fiber reinforcement material, wherein the fiber reinforcement material, saturated beforehand or afterward with a matrix material, is hardened after the winding, wherein two mutually spaced apart walls (4, 5) of fiber reinforced composite material are formed and an intermediate space disposed therebetween is completely foamed with a closed cell hard foam.

## Revendications

1. Tambour à câble pour un treuil à câble d'un entraînement par câble, avec une enveloppe de tambour (2) ainsi que deux disques de bord (3) adjacents à l'enveloppe de tambour (2) du côté de l'extrémité, l'enveloppe de tambour (2) et le cas échéant aussi les disques de bord (3) étant fabriqués en matériau composite renforcé par des fibres, l'enveloppe de tambour (2) possédant une structure multicouche avec au moins deux parois (4, 5 ; 7, 8) en matériau composite renforcé par des fibres, qui sont espacées l'une de l'autre et reliées l'une à l'autre par un noyau de mousse (6 ; 9), **caractérisé en ce que** les parois (4, 5 ; 7, 8) en matériau composite renforcé par des fibres possèdent chacune une épaisseur de paroi qui est inférieure à 25 % de l'épaisseur de paroi du noyau de mousse (6 ; 9), le noyau de mousse (6 ; 9) étant moussé à partir d'une mousse dure à cellules fermées en tant que corps plein et remplit complètement l'espace intermédiaire entre les parois (4, 5 ; 7, 8).

2. Tambour à câble selon la revendication précédente, dans lequel le noyau de mousse (6 ; 9) est moussé à partir d'une mousse de polyuréthane, de polystyrène ou de polychlorure de vinyle.

3. Tambour à câble selon l'une quelconque des revendications précédentes, dans lequel l'enveloppe de tambour (2) et/ou les disques de bord (3) est/sont renforcé(e)(s) par au moins une nervure de renforcement (12 ; 13) qui est formée en matériau composite renforcé par des fibres et fait saillie vers le côté intérieur de tambour à partir d'une surface d'enveloppe intérieure d'une paroi d'enveloppe (4) de l'enveloppe de tambour (2) en matériau composite renforcé par des fibres et/ou fait saillie d'une paroi de disque (7) du disque de bord (3) dans une direction axiale de l'axe longitudinal (L) de l'enveloppe de tambour (2).

4. Tambour à câble selon l'une quelconque des revendications précédentes, dans lequel au moins une nervure de renforcement (12 ; 13) s'étend entre deux parois d'enveloppe (4, 5) de l'enveloppe de tambour (2) et/ou entre deux parois de disque (7, 8) d'un disque de bord (3) et relie les deux parois d'enveloppe (4, 5) ou les deux parois de disque (7, 8) l'une à l'autre, l'au moins une nervure de renforcement (12 ; 13) étant enrobée de mousse dans le noyau de mousse (6 ; 9) entre les parois d'enveloppe (4, 5) et/ou entre les parois de disque (7, 8).

5. Tambour à câble selon l'une quelconque des revendications précédentes, dans lequel il est prévu sur l'enveloppe de tambour (2) plusieurs nervures de renforcement axiales (13) qui s'étendent au moins approximativement parallèlement à l'axe longitudinal (L) de l'enveloppe de tambour (2), et/ou plusieurs nervures de renforcement concentriques qui s'étendent dans des plans espacés les uns des autres perpendiculairement à l'axe longitudinal (L) de l'enveloppe de tambour (2).

6. Tambour à câble selon l'une quelconque des revendications précédentes, dans lequel l'au moins une nervure de renforcement (12 ; 13) présente une hauteur de nervure qui est dans la plage de 50 % à 250 % ou de 75 % à 125 % de l'épaisseur de paroi de la paroi (4, 5 ; 7, 8) en matériau composite renforcé par des fibres.

7. Tambour à câble selon l'une quelconque des revendications précédentes, dans lequel l'enveloppe de tambour (2) comprend au moins une paroi d'enveloppe (4, 5) en un matériau composite renforcé par des fibres avec un renforcement fibreux multicouche, le renforcement fibreux multicouche présentant des directions principales de fibres différentes dans les différentes couches de renforcement fibreux, l'enveloppe de tambour (2) présentant au moins une paroi d'enveloppe (4, 5) dans laquelle le renforcement fibreux du matériau composite renforcé par des fibres est orienté de telle sorte qu'une direction principale de fibres s'étend en hélice autour de l'axe longitudinal (L) de l'enveloppe de tambour (2), en particulier en plusieurs couches en croix avec des pas d'hélice opposés.

8. Tambour à câble selon l'une quelconque des revendications précédentes, dans lequel l'enveloppe de tambour (2) est pourvue d'un rainurage (16), qui est réalisé directement dans le matériau composite renforcé par des fibres de l'enveloppe de tambour (2).

9. Tambour à câble selon l'une quelconque des revendications précédentes, dans lequel l'enveloppe de tambour (2) est pourvue d'un gainage (17) qui présente un rainurage (16), le gainage (17) étant avantageusement vulcanisé sur le matériau composite renforcé par des fibres et/ou les disques de bord (3) étant pourvus d'un gainage (17) qui est appliqué, en particulier vulcanisé, sur une paroi de disque (7) en matériau composite renforcé par des fibres.

10. Tambour à câble selon l'une quelconque des revendications précédentes, dans lequel les disques de bord (3) sont formés sur l'enveloppe de tambour (2) intégralement, d'une seule pièce, de manière homogène en termes de matériau, un renforcement fibreux s'étendant en continu sur la zone de transition entre l'enveloppe de tambour (2) et le disque de bord (3).

11. Tambour à câble selon l'une quelconque des revendications 1 à 9, dans lequel les disques de bord (3) sont réalisés séparément de l'enveloppe de tambour (2) et sont reliés ultérieurement à l'enveloppe de tambour (2), les disques de bord (3) étant placés sur des côtés frontaux de l'enveloppe de tambour (2) et étant serrés contre les côtés frontaux de l'enveloppe de tambour (2) par des barres de traction (10) ou des tirants d'ancrage (18), les tirants d'ancrage (10) s'étendant à travers le noyau de mousse (6) de l'enveloppe de tambour (2) et/ou les tirants d'ancrage (18) étant ancrés dans une paroi d'enveloppe (4, 5) en matériau composite renforcé par des fibres.

12. Tambour à câble selon l'une quelconque des revendications précédentes, dans lequel les disques de bord (3) reposent à la manière d'un manchon ou d'un capuchon sur l'enveloppe de tambour (2).

13. Treuil à câble avec un tambour à câble (1), qui est réalisé selon l'une quelconque des revendications précédentes.

14. Procédé de fabrication d'un tambour à câble, qui est réalisé selon l'une quelconque des revendications 1 à 12 et présente une enveloppe de tambour (2) ainsi que deux disques de bord (3) adjacents à l'enveloppe de tambour (2) du côté de l'extrémité, l'enveloppe de tambour (2) et le cas échéant aussi les disques de bord (3) étant fabriqués en un matériau composite renforcé par des fibres, **caractérisé en ce que** au moins une paroi de l'enveloppe de tambour (2) est construite par enroulement d'un matériau de renforcement fibreux, le matériau de renforcement fibreux, imprégné avant ou après d'un matériau de matrice, étant durci après l'enroulement, deux parois (4, 5) espacées l'une de l'autre en matériau composite renforcé par des fibres étant formées et un espace intermédiaire disposé entre elles étant complètement rempli avec une mousse dure à cellules fermées.
